# FASCICULE DE BREVET EUROPEEN

(11) **EP 3 755 145 B1**
(45) Date de publication et mention de la délivrance du brevet: **15.01.2025**
(21) Numéro de dépôt: 19710162.9
(22) Date de dépôt: 22.02.2019
(51) Int. Cl.: A01M 1/10, A01M 1/02, A01M 23/08

(54) **CAGE DE CAPTURE D'HYMENOPTERES**
KÄFIG ZUR AUFNAHME VON HYMENOPTERA
CAGE FOR CAPTURING HYMENOPTERA

(30) Priorité: 22.02.2018 FR 1851532
(43) Date de publication de la demande: 30.12.2020
(73) Titulaire: Jabeprode, 29800 Pencran (FR)
(72) Inventeur: JAFFRE, Denis, 29400 Locmélar (FR)
(74) Mandataire: Ipsilon
(86) Numéro de dépôt international: PCT/IB2019/051453
(87) Numéro de publication internationale: WO 2019/162893

(56) Documents cités:
- WO-A1-2012/001442
- WO-A1-2016/004472
- US-A- 1 386 408
- US-A- 869 556
- US-A1- 2018 042 212

## Description

### DOMAINE TECHNIQUE DE L'INVENTION

La présente invention concerne une cage de capture autonome pour insectes indésirables, ce modèle concerne l'espèce *Vespa velutina,* un hyménoptère nommé plus couramment frelon asiatique ou frelons à pattes jaunes.

### ÉTAT DE LA TECHNIQUE

Le frelon asiatique, importé accidentellement avec des marchandises chinoises en 2004, se révèle être un nuisible très envahissant du fait de son mode de reproduction exponentiel et ses besoins en protéines carnées.

Prédateur généraliste, il impacte de nombreuses espèces d'insectes utiles dont de nombreux pollinisateurs qui sont les proies de ce prédateur, il est de fait destructeur de la biodiversité et menace la chaîne alimentaire par son omniprésence sur les territoires avec de grandes fluctuations de densité.

Ce frelon est capable de détruire des ruchers entiers d'abeilles mellifères en une seule saison, grève fortement l'activité apicole et accélère la disparition des apiculteurs en ruinant leurs exploitations.

Les frelons asiatiques sont des insectes sociaux et vivent donc, en colonies. Celles-ci s'abritent dans des nids de cellulose et constituées d'individus divisés en castes, chacune jouant un rôle défini dans la colonie. La reine fonde la colonie puis pond des oeufs. Les ouvrières, femelles ouvrières, non fécondées, enlèvent les larves, alimentent la colonie en nourriture et élaborent le nid. Les jeunes reines, assurent la dissémination de l'espèce sur un rayon de près de 70km/an (source Institut de Recherche sur la Biologie de l'insecte de Tours). Le lien social est assuré par une phéromone produite par la fondatrice qui est spécifique à chaque colonie (nid). Le phénomène de "trophallaxie", moins développé chez le Vespa velutina que chez l'abeille mellifère permet le partage et l'échange de la nourriture rapportée au nid par les ouvrières entre tous les individus de la colonie. La jeune reine, devenue « fondatrice » est au centre du réseau social de la colonie de par sa production de phéromones permettant sa parfaite cohésion. La fondatrice ayant un rôle majeur dans la reproduction, sa mort entraine, à terme, le déclin de la colonie.

Toutes les femelles des Hyménoptères sociaux sont pourvues d'un système vulnérant, c'est-à-dire d'un dard capable d'injecter du venin, ce qui est douloureux et parfois dangereux pour l'Homme si l'envenimation est grande.

Du point de vue biologique, *Vespa velutina* se distingue de son cousin européen *Vespa crabro* par plusieurs traits, de nuances morphologiques et de son activité exclusivement diurne.

Le nid de *Vespa velutina* est généralement construit à l'air libre, très souvent au sommet de grands arbres, contrairement à son cousin européen qui établit son nid toujours dans des cavités préexistantes, bien à l'abri des intempéries.

*Vespa velutina* vit mieux en milieu anthropisé qu'à la campagne. Son nid est aussi beaucoup plus volumineux et populeux : il peut contenir jusqu'à 2000 individus pour 800 chez le Vespa crabro.

*Vespa velutina* est particulièrement efficient en chasse car, très rapide et apte au vol stationnaire. Ceci lui permet la capture de ses proies avec beaucoup d'efficacité. Il les emporte pour les découper et n'en garder que le thorax avec lequel il fera une boulette qu'il rapporte au nid pour nourrir les larves.

Lorsqu'un nid de frelons asiatiques a détecté un rucher ou un nid d'insectes sociaux, la présence des frelons en vol stationnaire devant l'entrée des ruches stresse les colonies d'abeilles qui ne s'alimentent alors plus normalement : les réserves s'épuisent, les reines arrêtent de pondre et les colonies s'effondrent par manque de nourriture et/ou de population pour conserver une température suffisante dans la colonie.

Le frelon asiatique est donc un fléau pour l'activité apicole.

Il existe une technique de lutte qui permet de détruire un nid non découvert en capturant l'insecte puis en le manipulant et en déposant un produit attractif et insecticide. Lorsque celui-ci retourne au nid, il contamine les autres frelons (par principe du « cheval de Troie »). Pour être mise en oeuvre, une bonne maîtrise est requise (car il est nécessaire de les manipuler).

Le piégeage consiste en l'utilisation des dispositifs qui contiennent un appât attractif pour les frelons, et qui les maintiennent captifs.

La grande majorité des pièges, de type « Bouteille ou cloche » ne sont pas suffisamment efficaces car le frelon peut réaliser des vols à la verticale rendant possible leur échappement et ont l'inconvénient majeur d'être insuffisamment sélectif.

A titre d'illustration US2018/0042212 divulgue un piège à insecte utilisant une bouteille et un système d'entonnoir qui d'une part manque de sélectivité et qui d'autre part ne permet pas de diffuser suffisamment les effluves olfactifs d'un éventuel appât. Un principe similaire est retrouvé dans US 1,386408 qui soufre des mêmes défauts (certes atténués). US869556 et WO 2012/001442 divulguent des cages qui ne permettent pas une sélectivité des espèces. WO2016/004472A1 divulgue un « ovitrap » notamment configuré pour piéger les moustiques et pour permettre la collecte d'informations relatives aux moustiques ainsi piégés. Tous ces pièges ne permettent pas de capturer de manière satisfaisante *Vespa velutina.*

Une autre technique curative de lutte consiste à détruire les nids au moyen de matériel important (perche télescopique, matériel de pulvérisation), et de bonnes protections, manipulation de biocides et éventuelle attaque des frelons. L'électrocution des frelons par une "harpe électrique" permet la destruction des frelons près des ruches. Toutes ces méthodes sont curatives et ne permettent pas de réguler efficacement l'espèce.

### OBJET DE L'INVENTION

La présente invention vise à remédier à tous ces inconvénients.

A cet effet, la présente invention vise une cage sélective de capture (20) d'hyménoptères selon la revendication 1.

Dans le cadre de la présente invention, par « entonnoir », il est compris un système de nasse, ou équivalent (e.g. de la forme d'un entonnoir pour verser un liquide), permettant de canaliser les insectes vers l'entrée (orifice de passage) dans la cage de capture. Il peut donc être en théorie de toute forme du moment qu'il remplisse cette fonction. De manière préférée, l'entonnoir de l'invention est de forme générale tronconique, par exemple de section circulaire, ovale ou polygonale tel qu'un triangle, un carré, un rectangle, un losange, un pentagone, un hexagone, un heptagone ou encore un octogone.

De manière préférée, l'orifice de passage (212) comprend au moins une section limitante de passage d'une dimension supérieure à 7,0 mm et par exemple inférieure à 7,23 mm.

De manière plus préférée, l'orifice de passage (212) comprend au moins une section limitante de passage d'une dimension comprise entre 7,17 mm et 7,30 mm, encore plus préférentiellement comprise entre 7,18 mm et 7,25 mm, par exemple comprise entre 7,19 mm et 7,23 mm, telle que comprise entre 7,20 mm et 7,22 mm.

De manière préférée, la section en entonnoir a la forme d'un tronc de pyramide (213).

De manière préférée, la cage de capture selon la présente invention est caractérisée en que la section limitante de passage des pores est d'une taille inférieure ou égale à 12 mm, inférieure ou égale à 11 mm, inférieure ou égale à 7 mm, ou inférieure ou égale à 5 mm.

De manière avantageuse, la cage de capture selon la présente invention est caractérisée en que les pores de la platine poreuse (21) comprennent une forme polygonale et/ou une forme arrondie. Ainsi, la forme polygonale peut être un losange, par exemple avec une longue diagonale comprise entre 14 et 18 mm et une courte diagonale comprise entre 5 et 9 mm. Dans un mode réalisation particulier, la forme arrondie est constituée d'un rectangle dont au moins un coin est arrondi, voire caractérisée en ce qu'au moins un côté du rectangle est complètement arrondi.

En outre la présente invention concerne une cage de capture d'hyménoptères comprenant une boite ayant un fond et quatre parois dont deux parois comportent chacune une ouverture pour la circulation des effluves, remarquable en ce que chaque ouverture de circulation des effluves comporte une platine poreuse (telle qu'une platine grillagée). Ladite platine poreuse (telle qu'une platine grillagée) peut recouvrir l'ouverture de circulation des effluves, et peut être constituée d'au moins une partie en grillage ayant des mailles dont à la verticale la hauteur est inférieure à 0,7 cm. Ladite platine poreuse (telle qu'une platine grillagée) peut comporter un entonnoir de la forme d'un tronc de pyramide ayant une grande base et une petite base dirigées vers l'intérieur de la cage de capture, ledit tronc de pyramide ayant un orifice de passage correspondant à la petite base du tronc de pyramide.

Grâce à ces dispositions, il est nécessaire de peu de savoir-faire et peu de matériel. L'orifice de passage va permettre de faire entrer tous les frelons asiatiques tout en empêchant de les faire sortir car l'entonnoir (e.g. le tronc de pyramide) dirigé vers l'intérieur empêche le ou les frelons de trouver la sortie. La cage permet de faire une lutte préventive efficace.

Le fait d'installer ce type de dispositif au rucher (ou ailleurs) va permettre aux abeilles de sortir de la cage de capture tout en ne retenant que les frelons asiatiques. Les dimensions des mailles de la platine poreuse (telle qu'une platine grillagée) permettent aux abeilles et autres petits insectes de sortir.

Ainsi, de manière avantageuse, la cage de capture selon la présente invention est caractérisée en ce que l'hyménoptère est l'espèce *Vespa velutina,* et préférentiellement la cage de capture est configurée pour ne pas retenir d'abeilles mellifères.

L'invention est avantageusement mise en oeuvre selon les modes de réalisation et les variantes exposées ci-après, lesquelles sont à considérer individuellement ou selon toute combinaison techniquement opérante.

Dans un mode de réalisation, le grillage a des mailles dont la longue diagonale est comprise entre 14 et 18 mm, la courte diagonale est comprise entre 5 et 9 mm, la lanière est comprise entre 0,8 et 1,2 mm et l'épaisseur est comprise entre 0,6 et 1 mm.

Dans un mode de réalisation, l'orifice de passage (212) a la forme d'un rectangle dont la longueur est comprise entre 10 à 30 mm, telle que 20 mm, et dont la largeur est de 7,21 mm. Ainsi, la cage de capture selon la présente invention peut être caractérisée en que la cage est configurée de manière à ce que la longueur est horizontale au sol et la largeur est perpendiculaire au sol.

De manière préférée, la cage de capture (20) selon la présente invention est caractérisée par la distance entre la grande base et la petite base de l'entonnoir comprise entre 10 à 15 cm. Dans un mode de réalisation particulier, la hauteur entre la grande base et la petite base du tronc de pyramide peut être comprise entre 10 à 15 cm.

Dans un mode de réalisation, la boite comporte un couvercle amovible (ayant la propriété d'isoler l'intérieur de l'extérieur à son niveau).

Dans un mode de réalisation, les deux parois comportent chacune une ouverture en vis-à-vis.

Dans un mode de réalisation, le fond comporte au moins une partie poreuse (telle qu'une partie grillagée) sous laquelle il est prévu de positionner un appât.

Dans un mode de réalisation, la platine poreuse (telle qu'une platine grillagée) comporte une partie plane de forme rectangulaire dont la longueur est comprise entre 11 et 20 cm et la largeur est comprise entre 7 et 15 cm.

De plus, l'objet de la présente invention concerne un entonnoir pour une cage de capture (20) tel que décrit par la revendication 11.

Ainsi de manière préférée, l'entonnoir selon la présente invention peut être caractérisé en ce que l'orifice de passage (212) a la forme d'un rectangle dont la longueur est comprise entre 10 et 30 mm, telle que 20 mm, et la largeur est de 7,21 mm.

Dans un mode réalisation particulier, l'entonnoir selon la présente invention peut être caractérisé en ce qu'il comprend une portion poreuse dont la section limitante de passage des pores est inférieure en taille à la section limitante de passage de l'orifice de passage (212).

Ainsi, l'un des objets selon la présente invention concerne un entonnoir tel que décrit présentement, caractérisé en ce que ledit entonnoir a la forme d'un tronc de pyramide (213).

De plus, un objet de la présente invention concerne un kit de fabrication d'un entonnoir tel que décrit par la revendication 12.

En outre, un objet non revendiqué concerne un kit pour cage de capture (20) selon la présente invention, caractérisé en ce que ledit kit comprend :
- une boite ayant un fond (201),
- au moins trois parois, préférentiellement quatre parois, dont au moins deux parois comportent chacune une ouverture pour attacher un entonnoir tel que décrit ci-dessus,
- un entonnoir tel que décrit ci-dessus, et
- un couvercle.

Un autre objet de la présente invention concerne l'utilisation d'une cage de capture (20) selon la présente invention pour capturer au moins un frelon, préférentiellement un frelon de l'espèce *Vespa velutina* (capture de reines : utilisation préventive, et/ou capture d'ouvrières : utilisation curative). Cette utilisation peut être caractérisé en ce qu'au moins un appât est inséré dans la cage de capture (20), ledit au moins un appât étant optionnellement positionné et protégé sous une partie poreuse, telle qu'une partie grillagée. Dans ce mode de réalisation, l'utilisation peut être caractérisée en ce que ledit au moins un appât est sélectionné dans la liste consistant de cires mielleuses, de sirop de fruits rouges, de bière brune, de cidre ou de vin blanc doux saturés en sucres auquel de la confiture et/ou du miels peuvent être ajoutés, ou de matière carnée, par exemple issue de poisson, crustacés ou de coquillage, ou l'un des mélanges de ceux-ci.

La présente invention peut en outre concerner l'utilisation telle que décrite présentement, caractérisée en ce que des îlots constitués de petites éponges sont insérés comme diffuseurs d'effluves olfactives dans la cage de capture (20).

### BRÈVE DESCRIPTION DES FIGURES

D'autres avantages, buts et caractéristiques de la présente invention ressortent de la description qui suit faite, dans un but explicatif et nullement limitatif, en regard des dessins annexés, dans lesquels :
- la figure 1, représente une vue en perspective de l'intérieur de la cage de capture d'un mode de réalisation particulier de la cage objet de la présente invention,
- la figure 2 représente une vue en perspective d'un seul côté de la cage de capture de la figure 1 objet de la présente invention,
- la figure 3 représente une vue en perspective d'une platine poreuse (telle qu'une platine grillagée),
- la figure 4 représente une maille de la platine poreuse (telle qu'une platine grillagée),
- la figure 5 représente les éléments d'un kit pour un entonnoir en forme de tronc pyramide selon la présente invention.
- la figure 6 est une photographie du résultat de l'un des tests réalisés, tel qu'expliqué ci-dessous.

### DESCRIPTION D'EXEMPLES DE REALISATION DE L'INVENTION

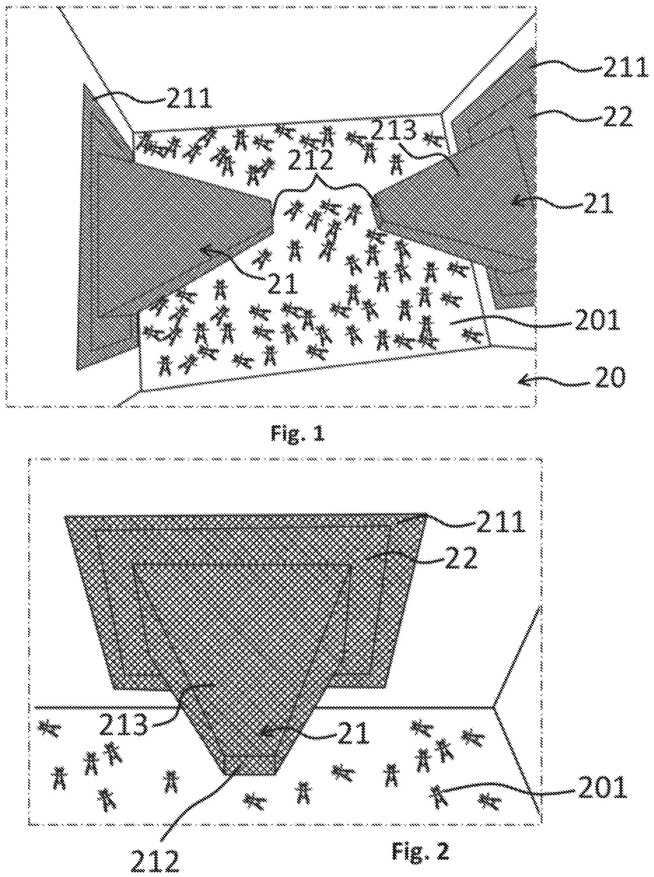

La figure 1 représente une vue en perspective de l'intérieur de la cage de capture 20.

La figure 2 représente une vue en perspective d'un seul côté de la cage de capture 20.

Sur ces figures il est montré une boite ayant un fond 201 et quatre parois dont deux parois comportent une ouverture 22 de circulation des effluves.

Chaque ouverture 22 de circulation des effluves est recouverte par une platine poreuse (telle qu'une platine grillagée) 21 recouvrant entièrement l'ouverture 22 de circulation des effluves.

La platine poreuse (telle qu'une platine grillagée) 21 est constituée d'un grillage ayant des mailles dont la longue diagonale est de 16 mm, la courte diagonale est de 8 mm, la lanière est de 1 mm et l'épaisseur est de 0,8 mm.

La platine poreuse (telle qu'une platine grillagée) 21 comporte un entonnoir de forme d'un tronc de pyramide 213 ayant une grande base et une petite base dirigée vers l'intérieur de la cage de capture 20, ledit tronc de pyramide 213 ayant un orifice de passage 212 correspondant à la petite base du tronc de pyramide 213.

L'entonnoir peut être en tout matériau suffisamment rigide pour sa mise en oeuvre, par exemple en métal, en polymère organique tel que du plastique (e.g. PVC) ou en un matériau biologique tel que du bois ou de la cellulose reconstituée. Il est montré ici un entonnoir de forme d'un tronc de pyramide 213 en métal déployé. Dans un exemple, l'entonnoir est ainsi en métal, tel que l'aluminium. Selon d'autres exemples, il est réalisé dans d'autres matériaux qui permettent de maintenir la forme de l'entonnoir (tel qu'un tronc de pyramide 213). La dimension du métal déployé peut être de 16 x 8 x 1 × 0,8 mm et il fixé sur une platine poreuse (telle qu'une platine grillagée) 21 de même nature.

Le profil de matériau rigide (tel qu'en métal) déployé au format choisi, permet le passage des abeilles et autres insectes de taille équivalente ou inférieure au travers des pores/mailles (dans les deux sens) dans les meilleures conditions d'aisance et de rapidité.

La platine poreuse (telle qu'une platine grillagée) 21 est positionnée à la normale de l'axe longitudinal de l'entonnoir et permet la circulation des effluves et une sortie rapide des abeilles sans encombrement. La platine poreuse (telle qu'une platine grillagée) 21 comporte une partie plane 211 de forme rectangulaire dont la longueur est comprise entre 11 et 20 cm, par exemple 15 cm et la largeur est comprise entre 7 et 15 cm, par exemple 10 cm.

La platine poreuse (telle qu'une platine grillagée) 21 est disposée comme ceci : la base du losange des mailles est dirigée vers l'extérieur pour plus d'aisance de sortie que de rentrée. La fixation de l'entonnoir sur la platine poreuse (telle qu'une platine grillagée) 21 se fait, après une découpe de 10 x 20 cm dans une plaque grillagée. La fixation est réalisée par agrafage, pointage, vissage (par ex. sur bois, photo), par collage (résine colle pour le plastique) ou par collier nylon sur la cage de capture 20 et par un recouvrement d'environ 1 cm.

L'orifice de passage 212 de l'entonnoir (tel qu'un tronc de pyramide) 213 poreux/grillagé, dirigé vers l'intérieur, permet le passage aisé des reines de frelon asiatique et, à cet effet, possède un orifice calibré de 7,21 mm de haut pour le passage effectif du thorax d'une reine de frelon asiatique tout en interdisant celui d'une reine de frelon européen qui est d'environ 1,5 mm supérieur en taille. C'est pourquoi il est possible d'avoir un orifice dans une gamme de valeurs autour de 7,21 mm afin de faire varier la sélectivité de la cage.

La profondeur de l'entonnoir (tel qu'un tronc pyramide) du module et sa structure totalement aérée est suffisamment longue pour éviter au frelon asiatique de retrouver la sortie (principe de la nasse). Les expérimentations menées ont permis de constater qu'aucun frelon asiatique entré n'en est jamais ressorti.

La hauteur (ou profondeur de l'entonnoir) entre la grande base et la petite base de l'entonnoir (tel qu'un tronc de pyramide) 213 est de 13 cm (compris entre 10 et 15 cm).

La cage de capture 20 comporte préférentiellement deux entonnoirs, en vis-à-vis pour une optimisation de la circulation des effluves.

Dans un autre exemple, les deux entonnoirs ne sont pas en vis-à-vis mais pour des questions de place, l'axe longitudinal des deux entonnoirs est décalé l'un par rapport à l'autre.

L'ouverture large de l'entonnoir assure ainsi l'accueil et la capture de l'intégralité des reines de frelon asiatique de l'environnement de la cage de capture 20 sur de très grandes distances au point de ne plus risquer la prédation par des ouvrières chasseuses tout au long de la saison pour protéger un rucher.

### La cage de capture 20 contient un appât.

Dans un exemple, l'appât est positionné sous le fond 201 de la cage de capture 20. Le fond 201 de la cage de capture 20 comporte une partie grillagée sous laquelle est positionné un appât. L'ensemble constitué de la cage de capture 20 et de l'appât permettent la capture du frelon asiatique.

Dans une autre variante, l'appât est positionné à l'intérieur de la cage toujours avec une grille pour laisser les odeurs olfactives se libérer.

L'appât qui a montré la meilleure efficacité est constitué de cires mielleuses (opercules des récoltes ou cadres de miel) qui doivent impérativement être protégées par un grillage fin (de type grillage inox fin utilisés pour l'aération des planchers de ruches) pour interdire l'accès à tous les insectes. Il y a deux raisons à cela :
- la nécessité d'une sortie rapide des insectes non cible de la cage de capture 20 (car ils ne peuvent pas accéder à l'appât) et pour éviter qu'ils ne deviennent les proies des frelons asiatiques déjà présents dans la cage de capture 20 ; et/ou
- le risque potentiel de transmission de pathologies par la contamination des abeilles par des spores de loque américaine qui pourraient être présents dans les cires mielleuses (ou jus de cirier). Pour limiter encore la prédation des abeilles par les frelons asiatiques déjà capturés, il est possible d'apporter (en saison et pour un fonctionnement en curatif) dans la cage de capture 20 de la matière carnée issue de restes crus de poisson non protégés (à remplacer tous les deux/trois jours). Ceci permet aux mouches d'être présentes dans la cage de capture 20, ces dernières devenant alors les proies privilégiées du frelon asiatique au lieu des abeilles qui ne stationnent plus et ne font que circuler dans la cage de capture 20, devenant ainsi des proies moins faciles. Les morceaux de poissons gras (tels que des restes), les crustacés et coquillages sont des substances carnées très prisées par les frelons asiatiques pour nourrir leur progéniture.

Pour ceux qui ne disposent pas de cires mielleuses, il peut être utilisé un mélange de sirop de fruits rouges, de bière brune, de cidre saturé en sucres auquel il peut être rajouté de la confiture ou du miel (par exemple provenant des restes de confiture ou de pots de miels oubliés au fond d'un placard). Des îlots constitués de petites éponges sont autant de diffuseurs d'effluves olfactives complémentaires. Il peut être rappelé que ce ne sont qu'exclusivement les effluves odorants qui exhalent des appâts et qui vont attirer les frelons asiatiques. Plus la surface de l'appât est importante, plus la cage de capture 20 a une efficacité et une portée d'action large. La très forte attractivité qui permet de collecter sur un rayon très large est lié à un appât particulièrement efficace qui peut être de plusieurs types, disposé sur une très grande surface inaccessible à tous insectes. Ceci permettant une mort rapide des frelons, un respect de l'aspect sanitaire pour les abeilles (éviter la transmission de maladies par les spores de loque américaine) leur permettant de ressortir très rapidement ainsi que tous les autres insectes de petite taille.

La période impérative est printanière pour prévenir la construction des nids de frelon asiatique. Elle permet la capture des reines à partir de fin mars. Étant donné la capture de l'intégralité des reines, ne pas prendre en compte la concurrence intra-spécifique (combat des reines entre-elles) que celles-ci se font à partir de cette période pour l'usurpation des nids. À partir de fin juin, la capture de reines est plus rare, voire s'arrête.

Pour les apiculteurs, la présence d'une cage de capture 20 proche du rucher est indispensable de mars à novembre (ou simplement, jusqu'à l'arrêt des captures des reines). Son caractère sélectif permet ceci. Une cage de capture 20 installée en routine, chaque année, de part et d'autre du rucher protège celui-ci pendant toute la période d'activité des abeilles.

Dès le début du printemps, il est nécessaire de retirer impérativement du rucher toute ruche morte ou faible qui deviendrait concurrente à la cage de capture 20 pour le miel qu'elle contient (et impératif aussi sur le plan sanitaire).

Pour l'apiculteur, la cage de capture 20 permet l'utilisation de cadre de miel cristallisé constitué de deux hausses superposées (si vous disposez de cadres de miel de hausse). La première hausse contiendra les cadres de miel, elle est posée sur un fond 201 de ruche aérée obturé par une portière d'entrée emboîtée côté fermeture pour interdire tout passage d'insecte. Cette hausse est isolée de celle du haut par le grillage fin décrit plus haut pour protéger l'appât (le mieux) de la taille de la hausse ou d'une grille à propolis tenue écartée des têtes de cadres par calage. La hausse (vide) du haut devient la cage de capture 20 du frelon asiatique et est protégée d'un couvercle amovible. Le couvercle amovible a pour fonction de fermer la boite et fonctionne comme un toit dont les dimensions sont supérieures à la section de la boite (i.e. isolant). Si l'on dispose de cadres de corps de ruche, la hausse du bas est remplacée par un corps de ruche.

Une alternative : au-dessus, au lieu d'une hausse, pour ne pas condamner du matériel apicole, un simple cadre de bois confectionné par l'assemblage de 4 planches sur lequel est fixé les deux platines grillagées avec chacune leur entonnoir.

### Comment éliminer les frelons asiatiques une fois dans la cage de capture 20 ?

À la tombée de la nuit, les frelons asiatiques capturés, présents dans la cage de capture 20 sont généralement regroupés sur une paroi hyménoptère social. Les frelons asiatiques à détruire peuvent être collectés dans au bocal avec un petit outil (pinceau.... ou à l'aspirateur sans fil). Leur congélation ou leur écrasement fait partie des solutions pour leur élimination.

La pose d'une cage de capture 20 est aussi très importante en cas d'attaques des ruchers, en été et automne, les frelons asiatiques y rentrent en grande quantité.

La capture sélective printanière de toutes les reines de frelon asiatique d'un secteur, reste, à ce jour, la seule méthode de lutte préventive simple et non coûteuse qui donne de vrais résultats en matière de régulation de l'Espèce Exotique Envahissante (EEE) *Vespa velutina nigrithorax.*

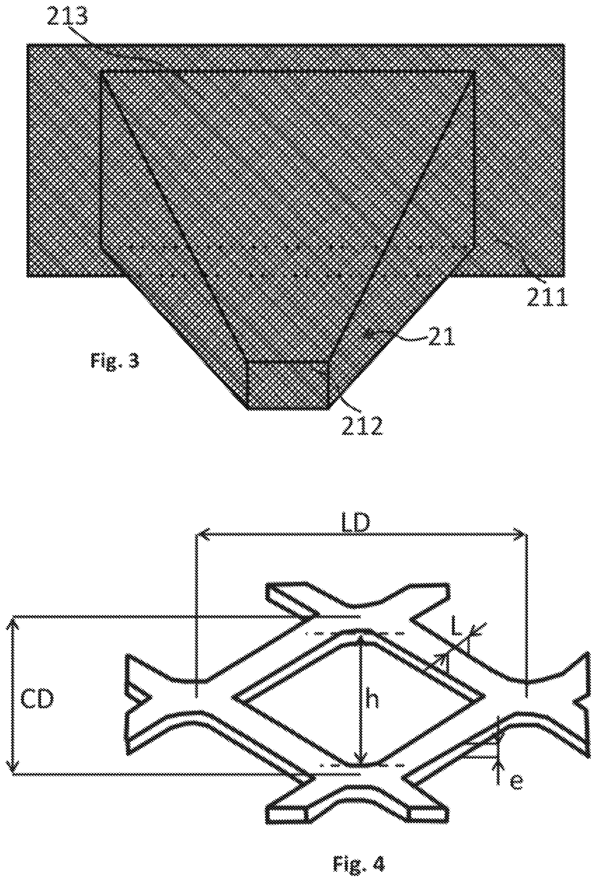

La figure 3 représente une platine poreuse (telle qu'une platine grillagée) 21 comportant un entonnoir de forme tronc de pyramide 213 ayant une grande base et une petite base. Le tronc de pyramide 213 est dirigé vers l'intérieur de la cage de capture 20. Le tronc de pyramide 213 possède un orifice de passage 212 correspondant à la petite base du tronc de pyramide 213.

La figure 4 représente une maille du grillage de la platine.

Selon un exemple, la grille est en métal déployé. Le métal est par exemple de l'aluminium.

Le métal déployé est fabriqué à partir de tôles, par découpage et étirage à froid. Il présente des mailles très résistantes étirées en une seule opération.

Cette figure montre les caractéristiques de la maille de la platine : LD pour longue diagonale, CD pour courte diagonale, L pour lanière et e pour l'épaisseur.

La platine poreuse (telle qu'une platine grillagée) est constituée d'un grillage ayant des mailles dont la longue diagonale est de 16 mm, la courte diagonale est de 8 mm, la lanière est de 1 mm et l'épaisseur est de 0,8 mm.

La courte diagonale est mesurée entre deux axes de mailles comme il est montré sur la figure.

Pour éviter au frelon asiatique de sortir, sur l'axe de la courte diagonale, l'espace vide, noté h, correspondant à la hauteur de la maille est inférieure à 0,7 cm.

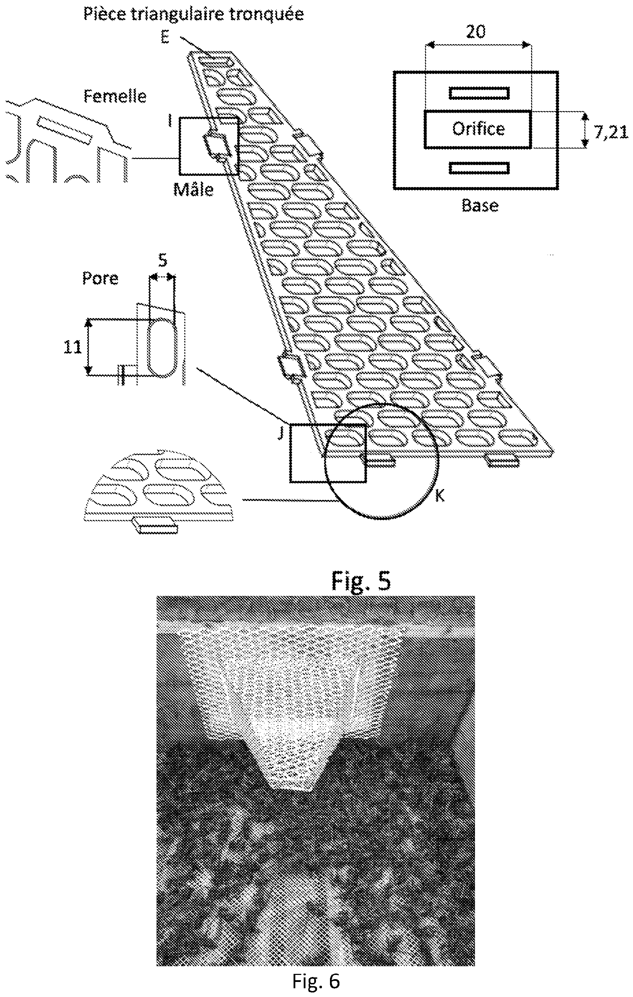

La figure 5 représente les éléments d'un kit pour un entonnoir en forme de tronc pyramide selon la présente invention, particulièrement bien adapté à la capture de *Vespa velutina.* Dans le cadre de la présente invention, il a été constaté que la taille du thorax des reines de frelon asiatique *Vespa velutina* est très légèrement inférieur à la taille du thorax des reines de frelon européen *Vespa crabro.* Il est ainsi possible d'être sélectif à cet égard.

Ainsi, ce kit peut comprendre une base avec un orifice de passage (212) de forme rectangulaire de largeur de 7,21 mm (i.e. une section limitante de passage de 7,21 mm) et une longueur de 20 mm. Des pièces triangulaires tronquées liées les unes aux autres par des moyens d'accroche (I), permettent de définir un entonnoir. Les moyens d'accroche peuvent être de type mâle ou femelle comme représenté permettant de s'attacher (e.g. par clips) l'un à l'autre. La pièce triangulaire peut comprendre des moyens d'accroche mâle et/ou femelle. L'entonnoir peut être inséré dans une boite pour former une cage selon la présente invention par des moyens d'accroche (K). La boite pourra comprendre un moyen d'accroche complémentaire à l'accroche (K), par exemple au fonctionnement semblable à l'accroche (I) Ces pièces triangulaires tronquées comprennent un moyen de fixation de la base, telle qu'une encoche (E). La base est ici de forme générale rectangulaire, mais peut aussi être d'une autre forme (triangulaire, pentagonal, hexagonale, etc.) selon le nombre de pièces triangulaires tronquées l'entourant. De manière préférée, la base est de forme générale rectangulaire, et nécessite 4 pièces triangulaires tronquées pour former l'entonnoir (tronc pyramidal). Les pores de la platine poreuses sont ici des rectangles aux coins arrondis (ici tout un côté est arrondi), dont la longueur est de 11 mm et la largeur de 5 mm. En effet, il a été constaté que la sortie des petits insectes est facilitée par de tels motifs (dépouilles côté intérieur sur la platine poreuse et le cône avec les bords des ouvertures arrondis).

Dans le cadre de la présente invention un calibrage au centième de millimètre (mm) a été effectué pour l'orifice de passage avec des tests effectués sur 9 reines *Vespa velutina* pour vérifier une uniformité de la hauteur de leur thorax. En pratique pendant 6 mois (de mi-mai 2017 à novembre 2017), deux cages selon la présente invention (dont l'une a été photographiée à la figure 6) mis en place ont permis de capturer des frelons *Vespa velutina* en curatif (i.e. pas les reines). Les orifices de passage étaient identiques : rectangulaire d'une longueur de 20 mm et d'une largeur de 7,21 mm, Les cages étaient configurées de manière à ce que l'axe de la longueur (20 mm) des orifices était à l'horizontale, et l'axe de la largeur (7,21 mm) était à la verticale. Les deux pièges étaient placés dans le même rucher d'abeilles mellifères : l'un d'eux posé à même sur une ruche et l'autre à distance. Le type d'appât utilisé dans les pièges était à base de miel (sous la forme d'opercules de cires mielleux issus des extractions de miel pour les caisses - possibilité d'utiliser des cadres de miel pour les ruches). 1062 frelons asiatiques (soit l'équivalent d'une demi-ruche de ces frelons) ont été ainsi capturés avec une sélectivité constatée de 99,7%. En effet, une seule reine de guêpe et deux ouvrières de première génération de frelon européen ont été capturés en plus des frelons *Vespa velutina.* Les deux ouvrières de type frelon Européens (normalement de tailles plus grandes que les frelons asiatiques) ont été accidentellement retenus (ceci dû à leur taille spécifique réduite par rapport à la normale). Toutefois une telle proportion de prise (0,2%) reste acceptable, voire négligeable, par rapport au nombre de frelons *Vespa velutina capturés* par la cage selon la présente invention.

Les mêmes dispositifs ont été installé en mars 2018 pour toute l'année suivante : une vingtaine de reines ont été rapidement capturées et quelques ouvrières par la suite, mais bien moins que l'année précédente, démontrant qu'une utilisation préventive axé dans la capture des reines en début de printemps.

### CLAUSES

Un aspect de la présente invention concerne et est résumé dans les clauses ci-dessous :
Clause 1. Cage de capture (20) d'hyménoptères comprenant une boite ayant un fond (201) et quatre parois dont deux parois comportent chacune une ouverture pour la circulation (22) des effluves, caractérisée en ce que chaque ouverture de circulation (22) des effluves comporte une platine grillagée (21) recouvrant l'ouverture de circulation (22) des effluves, ladite platine grillagée (21) est constituée d'au moins une partie en grillage ayant des mailles dont à la verticale la hauteur est inférieure à 0,7 cm (par exemple égale ou inférieure à 0,5 cm) ladite platine grillagée (21) comporte un entonnoir de forme d'un tronc de pyramide (213) ayant une grande base et une petite base dirigées vers l'intérieur de la cage de capture (20), ledit tronc de pyramide (213) ayant un orifice de passage (212) correspondant à la petite base du tronc de pyramide (213).
Clause 2. Cage de capture (20) selon la clause 1, dans laquelle le grillage a des mailles dont la longue diagonale est comprise entre 14 et 18 mm, la courte diagonale est comprise entre 5 et 9 mm, la lanière est comprise entre 0,8 et 1,2 mm et l'épaisseur est comprise entre 0,6 et 1 mm.
Clause 3. Cage de capture (20) selon la clause 1, dans laquelle l'orifice de passage (212) est un rectangle dont la largeur est comprise entre 1 à 3 cm et la hauteur est comprise entre 0,7 et 0,9 cm.
Clause 4. Cage de capture (20) selon la clause 1, dans laquelle la hauteur entre la grande base et la petite base du tronc de pyramide (213) est comprise entre 10 à 15 cm.
Clause 5. Cage de capture (20) selon la clause 1, dans laquelle la boite comporte un couvercle amovible isolant.
Clause 6. Cage de capture (20) selon la clause 1, dans laquelle les deux parois comportent chacune une ouverture en vis-à-vis.
Clause 7. Cage de capture (20) selon la revendication 1, dans laquelle le fond (201) comporte au moins une partie grillagée sous laquelle il est prévu de positionner un appât.
Clause 8. Cage de capture (20) selon la clause 1, dans laquelle la platine grillagée (21) comporte une partie plane (211) de forme rectangulaire dont la longueur est comprise entre 11 et 20 cm et la largeur est comprise entre 7 et 15 cm.

### NOMENCLATURE

- 20: cage de capture

- 201: fond

- 21: platine poreuse (telle qu'une platine grillagée)

- 211: partie plane de la platine poreuse (telle qu'une platine grillagée)
- 212: orifice de passage
- 213: tronc de pyramide
- 22: ouverture de circulation des effluves

## Revendications

1. Cage sélective de capture (20) d'hyménoptères comprenant une boite ayant un fond (201) et au moins trois parois dont au moins deux parois comportent chacune une ouverture pour la circulation (22) des effluves, chaque ouverture de circulation (22) des effluves comporte une platine poreuse (21) recouvrant l'ouverture de circulation (22) des effluves, ladite platine poreuse (21) comporte une section en entonnoir ayant une grande base et une petite base, la petite base comprend au moins un orifice de passage (212) sélectif et la petite base est placée vers l'intérieur de la cage de capture (20), la section limitante de passage des pores de la platine poreuse (21) est inférieure en taille à l'orifice de passage (212),
**caractérisée en ce que** :
- l'orifice de passage (212) comprend au moins une section limitante de passage comprise entre 7,15 et 7,30 mm, préférentiellement de 7,21 mm.

2. Cage de capture (20) selon la revendication 1, **caractérisée en ce que** la section en entonnoir a la forme d'un tronc de pyramide (213), et/ou la cage comprend quatre parois.

3. Cage de capture selon la revendication 1 ou 2, **caractérisée en ce que** l'hyménoptère est l'espèce *Vespa velutina.*

4. Cage de capture selon l'une quelconque des revendications précédentes, **caractérisée en ce que** :
- la section limitante de passage des pores est inférieure ou égale à 7 mm, ou inférieure ou égale à 5 mm et/ou
- les pores de la platine poreuse (21) comprennent une forme polygonale et/ou une forme arrondie.

5. Cage de capture selon la revendication 4, **caractérisée en ce que** :
- la forme polygonale est un losange, par exemple avec une longue diagonale comprise entre 14 et 18 mm et une courte diagonale comprise entre 5 et 9 mm, et/ou
- la forme arrondie est constituée d'un rectangle dont au moins un coin est arrondi, préférentiellement au moins un côté du rectangle est complètement arrondi.

6. Cage de capture selon l'une quelconque des revendications précédentes, **caractérisée en ce que** l'orifice de passage (212) a la forme d'un rectangle dont la longueur est comprise entre 10 et 30 mm, telle que 20 mm, et la largeur est de 7,21 mm.

7. Cage de capture selon la revendication 6, **caractérisée en ce que** la cage est configurée de manière à ce que la longueur est horizontale au sol et la largeur est perpendiculaire au sol lorsque le fond (201) de la boite est horizontal au sol.

8. Cage de capture selon l'une quelconque des revendications précédentes, **caractérisée en ce que** la platine poreuse (21) est une platine grillagée, dont le grillage de la platine grillagée a préférentiellement des mailles avec une lanière comprise entre 0,8 et 1,2 mm et une épaisseur comprise entre 0,6 et 1 mm.

9. Cage de capture (20) selon l'une quelconque des revendications précédentes, dans laquelle les deux parois comportent chacune une ouverture en vis-à-vis.

10. Cage de capture (20) selon l'une quelconque des revendications précédentes, configurée de manière à ce que le fond (201) comporte au moins une partie poreuse, telle qu'une platine grillagée, sous laquelle il est prévu de positionner un appât.

11. Entonnoir pour cage de capture (20) selon l'une quelconque des revendications précédentes, ledit entonnoir se terminant de son côté le plus fin par une base ayant au moins un orifice de passage (212) sélectif, **caractérisé en ce que** l'orifice de passage (212) comprend au moins une section limitante de passage comprise entre 7,15 et 7,30 mm, préférentiellement de 7,21 mm.

12. Kit de fabrication d'un entonnoir selon la revendication 11, ledit entonnoir se terminant de son côté le plus fin par une base ayant au moins un orifice de passage (212) sélectif, ledit entonnoir ayant la forme d'un tronc de pyramide (213) et ledit kit comprenant :
- au moins trois pièces triangulaires, préférentiellement quatre pièces triangulaires, lesdites pièces triangulaires étant tronquées à l'une de leurs extrémités,
- au moins un moyen de fixation de ladite base avec lesdites au moins trois pièces triangulaires au niveau de leur extrémité tronquée,
**caractérisé en ce que** ledit kit comprend :
- une base avec un orifice de passage (212) telle que définie dans la revendication 11 ou l'orifice de passage (212) a la forme d'un rectangle dont la longueur est comprise entre 10 et 30 mm, telle que de 20 mm, et la largeur est de 7,21 mm.

13. Utilisation d'une cage de capture (20) selon l'une quelconque des revendications 1 à 10 pour capturer au moins un frelon, préférentiellement un frelon de l'espèce *Vespa velutina.*

14. Utilisation selon la revendication 13 **caractérisé en ce qu'**au moins un appât est inséré dans la cage de capture (20), ledit au moins un appât étant optionnellement positionné et protégé sous une partie poreuse, telle qu'une partie grillagée et optionnellement des îlots constitués de petites éponges sont insérés comme diffuseurs d'effluves olfactives dans la cage de capture (20).

15. Utilisation selon la revendication 14 **caractérisé en ce que** ledit au moins un appât est sélectionné dans la liste consistant de cires mielleuses, de sirop de fruits rouges, de bière brune, de cidre ou de vin blanc doux saturés en sucres auquel de la confiture et/ou du miels peuvent être ajoutés, ou de matière carnée, par exemple issue de poisson, crustacés ou de coquillage, ou l'un des mélanges de ceux-ci.

## Patentansprüche

1. Selektiver Käfig (20) zum Fangen von Hautflüglern, umfassend einen Kasten mit einem Boden (201) und mindestens drei Wänden, von denen mindestens zwei Wände jeweils eine Öffnung für die Zirkulation (22) von Duftstoffen aufweisen, wobei jede Öffnung für die Zirkulation (22) von Duftstoffen eine poröse Platte (21) umfasst, die die Öffnung für die Zirkulation (22) von Duftstoffen abdeckt, die poröse Platte (21) einen trichterförmigen Querschnitt mit einer großen Basis und einer kleinen Basis aufweist, die kleine Basis mindestens eine Öffnung für einen selektiven Durchgang (212) umfasst und die kleine Basis zum Inneren des Fangkäfigs (20) hin angeordnet ist, der begrenzende Durchgangsquerschnitt der Poren der porösen Platte (21) größenmäßig kleiner als die Durchgangsöffnung (212) ist,
**dadurch gekennzeichnet, dass**:
- die Durchgangsöffnung (212) mindestens einen begrenzenden Durchgangsquerschnitt zwischen 7,15 und 7,30 mm, vorzugsweise 7,21 mm, umfasst.

2. Fangkäfig (20) nach Anspruch 1, **dadurch gekennzeichnet, dass** der trichterförmige Querschnitt die Form eines Pyramidenstumpfes (213) hat und/oder der Käfig vier Wände umfasst.

3. Fangkäfig nach Anspruch 1 oder 2, **dadurch gekennzeichnet, dass** der Hautflügler die Art *Vespa velutina* ist.

4. Fangkäfig nach einem der vorhergehenden Ansprüche, **dadurch gekennzeichnet, dass**:
- der begrenzende Durchgangsquerschnitt der Poren kleiner oder gleich 7 mm oder kleiner oder gleich 5 mm ist,
- die Poren der porösen Platte (21) eine polygonale Form und/oder eine abgerundete Form umfassen.

5. Fangkäfig nach Anspruch 4, **dadurch gekennzeichnet, dass**:
- die polygonale Form eine Raute ist, beispielsweise mit einer langen Diagonale zwischen 14 und 18 mm und einer kurzen Diagonale zwischen 5 und 9 mm, und/oder
- die abgerundete Form aus einem Rechteck besteht, von dem mindestens eine Ecke abgerundet, vorzugsweise mindestens eine Seite des Rechtecks vollständig abgerundet ist.

6. Fangkäfig nach einem der vorhergehenden Ansprüche, **dadurch gekennzeichnet, dass** die Durchgangsöffnung (212) die Form eines Rechtecks hat, dessen Länge zwischen 10 und 30 mm, beispielsweise 20 mm, und dessen Breite 7,21 mm beträgt.

7. Fangkäfig nach Anspruch 6, **dadurch gekennzeichnet, dass** der Käfig derart ausgelegt ist, dass die Länge horizontal zum Boden und die Breite senkrecht zum Boden verläuft, wenn der Boden (201) des Kastens horizontal zum Boden verläuft.

8. Fangkäfig nach einem der vorhergehenden Ansprüche, **dadurch gekennzeichnet, dass** die poröse Platte (21) eine Gitterplatte ist, wobei das Gitter der Gitterplatte Maschen mit einem Riemchen zwischen 0,8 und 1,2 mm und einer Dicke zwischen 0,6 und 1 mm hat.

9. Fangkäfig (20) nach einem der vorhergehenden Ansprüche, wobei die beiden Wände jeweils eine gegenüberliegende Öffnung aufweisen.

10. Fangkäfig (20) nach einem der vorhergehenden Ansprüche, der derart ausgelegt ist, dass der Boden (201) mindestens einen porösen Teil, wie beispielsweise eine Gitterplatte, aufweist, unter dem vorgesehen ist, einen Köder zu positionieren.

11. Trichter für Fangkäfig (20) nach einem der vorhergehenden Ansprüche, wobei der Trichter an seiner dünnsten Seite in einer Basis mit mindestens einer Öffnung für einen selektiven Durchgang (212) endet, **dadurch gekennzeichnet, dass** die Durchgangsöffnung (212) mindestens einen begrenzenden Durchgangsquerschnitt zwischen 7,15 und 7,30 mm, vorzugsweise 7,21 mm, umfasst.

12. Set zur Herstellung eines Trichters nach Anspruch 11, wobei der Trichter an seiner dünnsten Seite in einer Basis mit mindestens einer Öffnung für einen selektiven Durchgang (212) endet, wobei der Trichter die Form eines Pyramidenstumpfs (213) hat und das Set umfasst:
- mindestens drei dreieckige Teile, vorzugsweise vier dreieckige Teile, wobei die dreieckigen Teile an einem ihrer Enden abgestumpft sind,
- mindestens ein Mittel zum Befestigen der Basis mit den mindestens drei dreieckigen Teilen im Bereich ihres abgestumpften Endes,
**dadurch gekennzeichnet, dass** das Set umfasst:
- eine Basis mit einer Durchgangsöffnung (212) nach Anspruch 11 oder die Durchgangsöffnung hat die Form eines Rechtecks, dessen Länge zwischen 10 und 30 mm, beispielsweise 20 mm, und dessen Breite 7,21 mm beträgt.

13. Verwendung eines Fangkäfigs (20) nach einem der Ansprüche 1 bis 10 zum Fangen mindestens einer Hornisse, vorzugsweise einer Hornisse der Art *Vespa velutina.*

14. Verwendung nach Anspruch 13, **dadurch gekennzeichnet, dass** mindestens ein Köder in den Fangkäfig (20) eingeführt wird, wobei der mindestens eine Köder optional unter einem porösen Teil, wie einem Gitterteil, positioniert und geschützt ist und optional Inseln aus kleinen Schwämmen als Duftstoffverteiler in den Fangkäfig (20) eingeführt sind.

15. Verwendung nach Anspruch 14, **dadurch gekennzeichnet, dass** der mindestens eine Köder aus der Liste ausgewählt wird, die aus Honigwachs, Sirup aus roten Früchten, dunklem Bier, Apfelwein oder süßem Weißwein, gesättigt mit Zucker, dem Konfitüre und/oder Honig zugesetzt werden können, oder fleischigem Material, beispielsweise aus Fisch, Schalentieren oder Muscheln, oder einer Mischung davon besteht.

## Claims

1. Selective capture cage (20) for hymenoptera comprising a box having a bottom (201) and at least three walls, at least two walls of which each comprise an opening for the circulation (22) of scents, each circulation opening (22) of scents comprises a porous plate (21) covering the circulation opening (22) of scents, said porous plate (21) comprises a funnel section having a large base and a small base, the small base comprises at least one selective passage opening (212) and the small base is placed towards the inside of the capture cage (20), the limiting section for passage of the pores of the porous plate (21) is smaller in size than the passage opening (212),
**characterized in that**:
- the passage opening (212) comprises at least a limiting passage section comprised between 7.15 and 7.30 mm, preferably 7.21 mm.

2. Capture cage (20) according to claim 1, **characterized in that** the funnel section has the shape of a pyramid trunk (213), and/or the cage comprises four walls.

3. Capture cage according to claim 1 or 2, **characterized in that** the hymenoptera is the species *Vespa velutina.*

4. Capture cage according to any one of the preceding claims, **characterized in that**:
- the limiting pore passage section is less than or equal to 7 mm, or less than or equal to 5 mm, and/or
- the pores of the porous plate (21) comprise a polygonal shape and/or a rounded shape.

5. Capture cage according to claim 4, **characterized in that**:
- the polygonal shape is a rhombus, for example with a long diagonal comprised between 14 and 18 mm and a short diagonal comprised between 5 and 9 mm, and/or
- the rounded shape is constituted of a rectangle of which at least one corner is rounded, preferably at least one side of the rectangle is completely rounded.

6. Capture cage according to any one of the preceding claims, **characterized in that** the passage opening (212) has the shape of a rectangle whose length is comprised between 10 and 30 mm, such as 20 mm, and the width is 7.21 mm.

7. Capture cage according to claim 6, **characterized in that** the cage is configured so that the length is horizontal to the ground and the width is perpendicular to the ground when the bottom (201) of the box is horizontal to the ground.

8. Capture cage according to any one of the preceding claims, **characterized in that** the porous plate (21) is a screen plate, of which the screen of the screen plate preferably has meshes with a strap comprised between 0.8 and 1.2 mm and a thickness comprised between 0.6 and 1 mm.

9. Capture cage (20) according to any one of the preceding claims, wherein the two walls each comprise an opening in vis-à-vis.

10. Capture cage (20) according to any one of the preceding claims, configured so that the bottom (201) comprises at least one porous portion, such as a screen plate, under which it is intended to position a bait.

11. Funnel for capture cage (20) according to any one of the preceding claims, said funnel ending on its finest side by a base having at least one selective passage opening (212), **characterized in that** the opening passage (212) comprises at least one limiting passage section comprised between 7.15 and 7.30 mm, preferably 7.21 mm.

12. Manufacturing kit for a funnel according to claim 11, said funnel ending on its finest side by a base having at least one selective passage opening (212), said funnel having the shape of a pyramid trunk (213) and said kit comprising:
- a base with a passage opening (212) as defined in claim 11 or the passage opening (212) has the shape of a rectangle whose length is comprised between 10 and 30 mm, such as 20 mm, and the width is 7.21 mm.

13. Use of a capture cage (20) according to any one of claims 1 to 10 for capturing at least one hornet, preferably a hornet of the species *Vespa velutina.*

14. Use according to claim 13 **characterized in that** at least one bait is inserted into the capture cage (20), said at least one bait being optionally positioned and protected under a porous portion, such as a meshed portion, and optionally islets constituted of small sponges are inserted as diffusers of olfactory scents in the capture cage (20).

15. Use according to claim 14 **characterized in that** said at least one bait is selected in the list consisting of honeyed waxes, red fruit syrup, dark beer, cider or sweet white wine saturated in sugars to which jam and/or honey can be added, or of meaty material, for example from fish, crustaceans or shellfish, or one of the mixtures thereof.
